# EUROPÄISCHE PATENTANMELDUNG

(11) **EP 0 772 961 A1**
(43) Veröffentlichungstag der Anmeldung: **14.05.1997**
(21) Anmeldenummer: 96115899.5
(22) Anmeldetag: 04.10.1996
(51) Int. Cl.: A01B 69/02, A01B 35/28

(54) **Spuranreisser**

(30) Priorität: 10.11.1995 DE 19541827; 17.07.1996 DE 19628703
(71) Anmelder: Amazonen-Werke H. Dreyer GmbH & Co. KG, D-49205 Hasbergen (DE)
(72) Erfinder: Wiemeyer, Benno, 49504 Lotte-Halen (DE)

(57) **Zusammenfassung**

Spuranreißer für eine landwirtschaftliche Maschine mit an einem Ausleger drehbar gelagertem Spurreißerelement (3). Das Spurreißerelement (3) besteht aus zumindest einer Scheibe (4) mit sternförmig angeordneten Armen (5), die in oder entgegen der Drehrichtung des Spurreißerelementes (3) gekrümmt ausgebildet sind. Die Arme können sich auch nach außen verjüngen.

## Beschreibung

Die Erfindung betrifft einen Spuranreißer gemäß des Oberbegriffes des Patentanspruches 1.

Ein derartiger Spuranreißer ist beispielsweise durch die DE-OS 32 42 932 bekannt. Dieses Spurreißerelement ist als Scheibe ausgebildet. Bei praktischen Einsätzen hat sich gezeigt, daß ein als Scheibe ausgebildetes Spurreißerelement keine ausreichend deutliche Spur auf unbearbeiteten Bodenflächen, auf denen Stoppeln und Stroh und Pflanzenreste sich befinden, erzeugt.

Man hat dann in der Praxis versucht, mit starren Spurreißerzinken eine Verbesserung herbei zu führen. Auch starre Spurreißerzinken sind nicht in der Lage auf unbearbeiteten Bodenflächen eine ausreichend deutlich sichtbare Spur zu erzeugen.

Der Erfindung liegt die Aufgabe zugrunde, ein Spurreißerelement vorzuschlagen, welches in einfacher Weise auf unbearbeiteten und Strohstoppeln sowie Pflanzen- und Strohreste aufweisenden Bodenoberfläche eine deutlich sichtbare Spur anzureißen in der Lage ist.

Diese Aufgabe wird erfindungsgemäß dadurch gelöst, daß das Spurreißerelement aus zumindest einer Scheibe mit sternförmig angeordneten Armen besteht, die in oder entgegen der Drehrichtung des Spurreißerelementes gekrümmt ausgebildet sind. Es hat sich bei praktischen Einsätzen gezeigt, daß mittels derartiger, quirlähnlich ausgebildeter Spurreißerelemente auch unter schwierigsten Voraussetzungen eine deutlich sichtbare Spur erzeugt wird.

Unter schwierigen Bedingungen kann es erforderlich sein, daß zumindest zwei unabhängig zueinander drehbar gelagerte Spurreißerelemente vorgesehen sind.

Um auch unter schwierigsten Voraussetzungen eine einwandfreie Spur anzureißen sowie eine einwandfreie Arbeit des Spuranreißers zu gewährleisten, ist vorgesehen, daß sich die Arme zumindest annähernd nach außen verjüngen. Infolge dieser Maßnahme wird sichergestellt, daß die Spurreißerelemente sich immer selbst reinigen und sich nicht mit Pflanzenresten zusetzen.

Eine weitere Lösung der Erfindung wird dadurch erreicht, daß die äußeren Enden der Arme etwa rechtwinklig, vorzugsweise um 60 - 80 Grad, insbesondere ca. 15 Grad zu dem übrigen Teil der Arme abgewinkelt sind. Infolge dieser Maßnahme wird eine ausreichend große Aufstandsfläche der äußeren Enden der Spurreißerarme des Spurreißerelementes auf dem Boden erreicht, so daß diese Spurreißerelemente nicht in den Boden absinken. Darüber hinaus wird bei einer entsprechenden Anstellung der Spurreißerelemente schräg zur Fahrtrichtung und schräg zum Boden durch diese abgewinkelten Teile der Arme eine gut sichtbare Spur auf die Bodenoberfläche angerissen. Außerdem bilden die abgewinkelten Enden der Arme die Lauf- und/oder Umfangsfläche des Spurreißerelementes. In bevorzugter Weise weisen die abgewinkelten Enden der Arme eine Länge von etwa 3 - 4 cm auf.

In einer weiteren Ausbildung der Erfindung ist bei einem Spuranreißerelement, welches aus zumindest einer konkav gewölbten und am Außenumfang gezahnten Scheibe besteht, vorgesehen, daß die Zähne zumindest teilweise zusätzlich zu der konkaven Wölbung der Scheibe unter Fortsetzung der konkaven Wölbung abgebogen sind. Somit sind die Zähne quasi gegenüber der Scheibe abgewinkelt. Die Zähne sind mit einem stärkeren Winkel als die konkave Wölbung des übrigen Teiles der Scheibe versehen. Infolge dieser Maßnahmen läßt sich ein einfach ausgebildetes Spuranreißerelement schaffen, welches auch unter schwierigen, insbeondere auf unbearbeiteten Bodenoberflächen eine deutlich sichtbare Spur anreißt.

Weitere Einzelheiten der Erfindung sind der Beispielsbeschreibung und den Zeichnungen zu entnehmen. Hierbei zeigen
- Fig.1: das Spuranreißerelement des Spuranreißers in der Ansicht I-I,
- Fig.2: die Anordnung des Spuranreißerelementes an einem Spurreißerarm in der Draufsicht und in Prinzipdarstellung,
- Fig.3: die Draufsicht auf den Spuranreißer mit einer anderen Einstellung des Spuranreißers gegenüber dem Spuranreißerarm,
- Fig.4: den Spuranreißer in einer anderen Einstellung in der Draufsicht,
- Fig.5: das Spuranreißerelement des Spuranreißers in der Ansicht von hinten,
- Fig.6: das Spuranreißerelement in der Draufsicht,
- Fig.7: das Spuranreißerelement in der Ansicht III-III,
- Fig.8: ein weiteres Spuranreißerelement des Spuranreißer in Seitenansicht und
- Fig.9: das Spuranreißerelement in der Ansicht IX-IX.

Der Spuranreißer 1 weist den Ausleger 2 auf, der in bekannter und nicht näher dargestellter Weise an dem Rahmen einer Verteilmaschine, beispielsweise einer Drillmaschine befestigt ist. An dem Ausleger 2 sind zwei Spuranreißerelemente 3 unabhängig zueinander frei drehbar gelagert. Die Spuranreißerelemente 3 bestehen aus einer Scheibe 4 mit sternförmig angeordneten Armen 5, die in oder entgegen der Drehrichtung 6 des Spuranreißerelementes 3 je nach Anordnung gekrümmt ausgebildet sind. Die Fortbewegungsrichtung der Verteilmaschine ist jeweils durch den Pfeil 7 angedeutet.

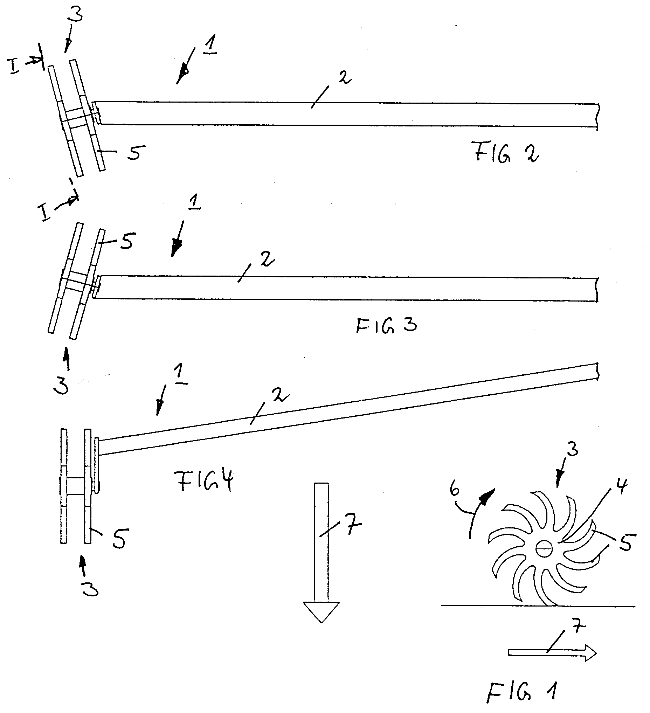

Gemäß Fig.3 ist eine andere Einstellung des Spuranreißerelementes 3 vorgesehen.

Die in den Fig.2 und 3 dargestellten Einstellung des Spuranreißerelementes 3 zeigen die beiden möglichen extremen Einstellungen des Spuranreißerelementes 3 in einem Winkel zur Fahrtrichtung 7.

Die Fig.4 zeigt eine mittlere Einstellung, bei der das Spuranreißerelement 3 parallel zur Fahrtrichtung 7 ausgerichtet ist.

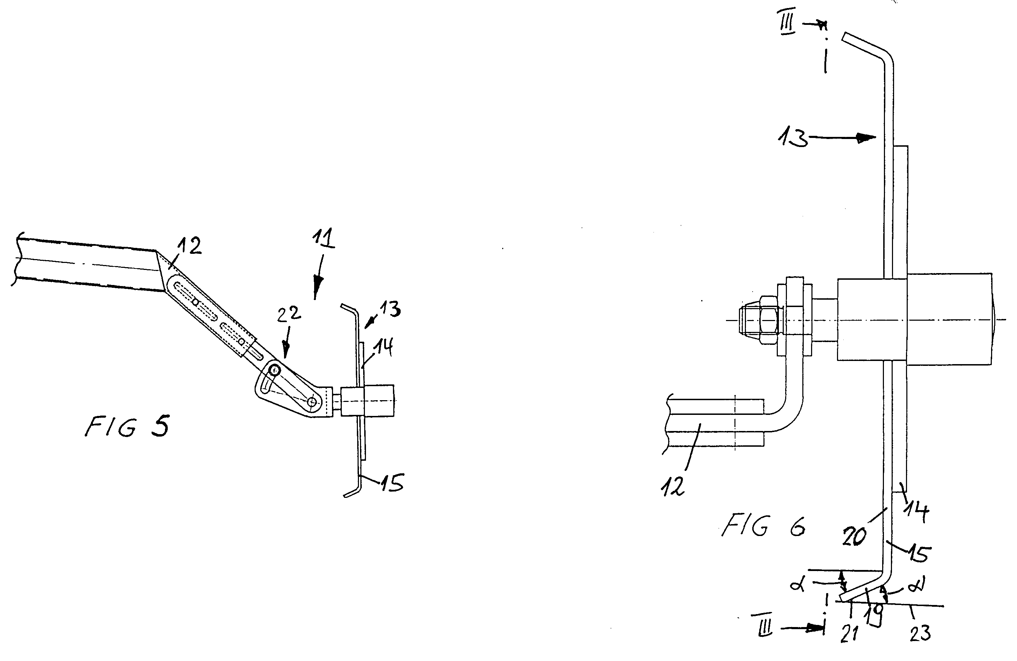

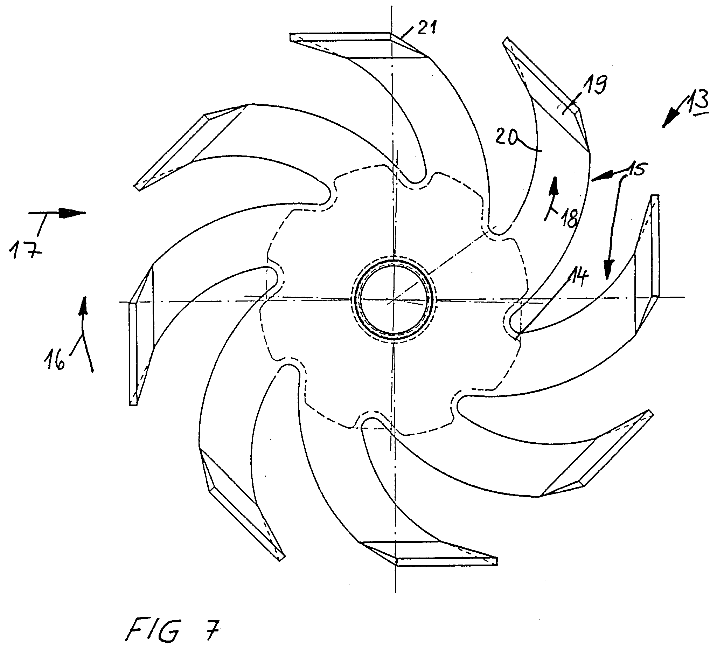

Der Spuranreißer 11 gemäß der Fig.5 bis 7 weist den Ausleger 12 auf, der in bekannter und nicht näher dargestellter Weise an dem Rahmen einer Verteilmaschine, beispielsweise einer Drillmaschine befestigt ist. An dem Ausleger 12 ist das Spurreißerelement 13 frei drehbar mittels einer geeigneten Lagerung gelagert. Das Spurreißerelement 13 besteht aus einer Scheibe 14 mit sternförmig angeordneten Armen 15, die entgegen der Drehrichtung 16 des Spurreißerelementes 13 gekrümmt ausgebildet sind. Die Fortbewegungsrichtung der Verteilmaschine ist durch den Pfeil 17 angedeutet.

Die Arme 15 des Spurreißerelementes 13 verjüngen sich in Pfeilrichtung 18 nach außen. Die äußeren Enden 19 der Arme 15 sind etwa rechtwinklig, vorzugsweise um etwa 60 - 80 Grad zu dem übrigen Teil 20 der Arme 15 abgewinkelt. Der Winkel α beträgt vorzugsweise 15 Grad abweichend zu dem rechten Winkel zu den Armen 15. Die abgewinkelten Enden 19 der Arme 15 bilden die Lauf- und Umfangsfläche 21 des Spurreißerelementes 13. Die abgewinkelten Enden 19 der Arme 15 weisen eine Länge L von etwa 3 - 4 cm auf. Das Spurreißerelement 13 läßt sich durch die Verstellelemente 22 in unterschiedlichen Stellungen zur Bodenoberfläche 23 anstellen. Hierbei kann z.B., um eine aggressive Anstellung zu erreichen, das Spurreißerelement 13 so eingestellt werden, daß die Außenfläche 21 der abgewinkelten Enden 19 der Arme 15 zur Bodenoberfläche 23 etwa ein Winkel α' von 15 Grad zur Bodenoberfläche 23 einschließen. Es ist jedoch auch möglich, das Spurreißerelement 13 mittels der Einstellelemente 22 so zu verändern, daß die abgewinkelten Enden 19 der Arme 15 etwa parallel oder parallel zur Bodenoberfläche 23 verlaufen. Die jeweilige Einstellung ist entsprechend den vorherrschenden Einsatz und Bodenverhältnissen zu wählen und vorzunehmen.

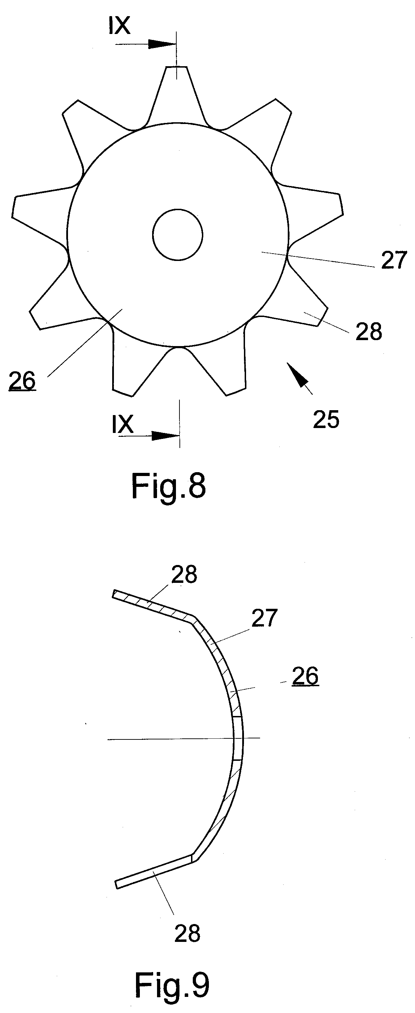

Der Spuranreißer 25 gemäß der Fig.8 und 9 ist an einem nicht dargestellten Ausleger befestigt, der in bekannter und nicht näher dargestellter Weise an dem Rahmen einer Verteilmaschine, beispielsweise einer Drillmaschine befestigt ist. An dem Ausleger ist das Spurreißerelement 26 frei drehbar mittels einer geeigneten Lagerung gelagert. Das Spurreißerelement 26 besteht aus der konkav gewölbten und am Außenumfang gezahnten Scheibe 27. Die Zähne 28, die durch die Zahnung gebildet werden, sind zusätzlich zu der konkaven Wölbung der Scheibe 27 unter Fortsetzung der konkaven Wölbung abgebogen. Die Zähne 28 sind mit einem stärkeren Winkel als die konkave Wölbung des übrigen Teiles 27 versehen. In einfacher Weise sind die Zähne 28 zu der konkaven Wölbung der Scheibe 27 topfartig in Form eines Kragens abgebogen angeordnet.

## Patentansprüche

1. Spuranreißer für eine landwirtschaftliche Maschine mit an einem Ausleger drehbar gelagertem Spurreißerelement, dadurch gekennzeichnet, daß das Spurreißerelement (3) aus zumindest einer Scheibe (4) mit sternförmig angeordneten Armen (5) besteht, die in oder entgegen der Drehrichtung (6) des Spurreißerelementes (3) gekrümmt ausgebildet sind.

2. Spuranreißer nach Anspruch 1, dadurch gekennzeichnet, daß zumindest zwei unabhängig zueinander drehbar gelagerte Spurreißerelemente (3) vorgesehen sind.

3. Spuranreißer für eine landwirtschaftliche Maschine mit an einem Ausleger drehbar gelagertem Spurreißerelement, wobei das Spurreißerelement aus zumindest einer Scheibe mit sternförmig angeordneten Armen besteht, die in oder entgegen der Drehrichtung des Spurreißerelementes gekrümmt ausgebildet sind, insbesondere nach Anspruch 1, dadurch gekennzeichnet, daß die Arme sich zumindest annähernd nach außen verjüngen.

4. Spuranreißer für eine landwirtschaftliche Maschine mit an einem Ausleger drehbar gelagertem Spurreißerelement, wobei das Spurreißerelement aus zumindest einer Scheibe mit sternförmig angeordneten Armen besteht, die in oder entgegen der Drehrichtung des Spurreißerelementes gekrümmt ausgebildet sind, insbesondere nach Anspruch 1, dadurch gekennzeichnet, daß die äußeren Enden der Arme etwa rechtwinklig, vorzugsweise um 60 - 80 Grad, insbesondere ca. 15 Grad zu dem übrigen Teil der Arme abgewinkelt sind.

5. Spuranreißer nach Anspruch 4, dadurch gekennzeichnet, daß die abgewinkelten Enden der Arme die Lauf- und/oder Umfangsfläche des Spurreißerelementes bilden.

6. Spuranreißer nach Anspruch 4, dadurch gekennzeichnet, daß die Enden der Arme eine Länge von etwa 3 - 4 cm aufweisen.

7. Spuranreißer für eine landwirtschaftliche Maschine mit an einem Ausleger drehbar gelagertem Suranreißerelement, wobei das Spuranreißerelement aus zumindest einer konkav gewölbten und am Außenumfang gezahnten Scheibe besteht, dadurch gekennzeichnet, daß die Zähne (28) zumindest teilweise zusätzliche zu der konkav Wölbung der Scheibe (26, 27) unter Fortsetzung der konkaven Wölbung abgebogen sind.

8. Spuranreißer nach Anspruch 7, dadurch gekennzeichnet, daß die Zähne (28) mit einem stärkeren Winkel als die konkave Wölbung des übrigen Teiles der Scheibe (26, 27) versehen sind.
